# EUROPEAN PATENT APPLICATION

(11) **EP 4 421 914 A1**
(43) Date of publication of application: **28.08.2024**
(21) Application number: 23807961.0
(22) Date of filing: 22.05.2023
(51) Int. Cl.: H01M 4/525, H01M 4/131, H01M 4/505, C01G 53/00, H01M 4/02

(54) **CATHODE ACTIVE MATERIAL, METHOD FOR MANUFACTURING SAME, AND CATHODE COMPRISING SAME**

(30) Priority: 20.05.2022 KR 20220062284
(71) Applicant: LG Chem, Ltd., Yeongdeungpo-gu Seoul 07336 (KR)
(72) Inventor: JUNG, Won Sig, Daejeon 34122 (KR); PARK, Hyun Ah, Daejeon 34122 (KR); LEE, Kang Hyeon, Daejeon 34122 (KR); CHOI, Hwan Young, Daejeon 34122 (KR); KIM, Jong Pil, Daejeon 34122 (KR); LEE, Eung Ju, Daejeon 34122 (KR)
(74) Representative: Hoffmann Eitle
(86) International application number: PCT/KR2023/006937
(87) International publication number: WO 2023/224442

(57) **Abstract**

The present invention relates to a single-particle positive electrode active material capable of providing a battery having improved initial resistance and lifespan, a method for preparing the same, and a positive electrode including the same, and relates to a single-particle positive electrode active material having a (cosα)² value of 0.5 or greater wherein α represents an angle between a long axis of a crystal grain obtained through electron backscatter diffraction (EBSD) analysis and a lithium migration path, a method for preparing the same, and a positive electrode including the same.

## Description

### TECHNICAL FIELD

### Cross-reference to Related Applications

This application claims the benefit of Korean Patent Application No. 10-2022-0062284, filed on May 20, 2022, in the Korean Intellectual Property Office, the disclosure of which is incorporated herein in its entirety by reference.

### Technical Field

The present invention relates to a single-particle positive electrode active material, a method for preparing the same, and a positive electrode including the same.

### BACKGROUND ART

Lately, there has been a rapid rise in demand for secondary batteries as an energy source with an increase in technology development and demand with respect to mobile devices and electric vehicles.

Lithium secondary batteries are typically provided with a positive electrode, a negative electrode, a separator, and an electrolyte, and the positive electrode and the negative electrode include active materials enabling intercalation/deintercalation of lithium ions.

Meanwhile, a positive electrode active material used in a lithium secondary battery generally takes the form of spherical secondary particles in which hundreds of submicron primary particles are aggregated. However, the positive electrode active material having the form of secondary particles causes degradation in battery properties as the secondary particles are broken when the aggregated primary particles are separated upon repeated charging and discharging.

In order to prevent the limitation, single-particle positive electrode active materials are under active development, but when an electrode is prepared using the single-particle positive electrode active materials, a c-axis direction, which is the main expansion direction of the single-particle cathode active materials, is hardly aligned as desired or the extent of alignment is not easily quantified. Meanwhile, when the c-axis direction, which is the main expansion direction of the single-particle positive electrode active material, is not aligned and is randomly present, a reduction in lifespan, capacity, and output of batteries is caused. Accordingly, there remains a need for a technology designed to overcome those limitations.

### DISCLOSURE OF THE INVENTION

### TECHNICAL PROBLEM

An aspect of the present invention provides a single-particle positive electrode active material capable of providing a battery having improved initial resistance and lifespan, a method for preparing the same, and a positive electrode including the same.

### TECHNICAL SOLUTION

To resolve the tasks described above, the present invention provides a single-particle positive electrode active material, a method for preparing the same, and a positive electrode including the same.
(1)According to an aspect of the present invention, there is provided a single-particle positive electrode active material having a (cosα)2 value of 0.5 or greater wherein α represents an angle between a long axis of a crystal grain obtained through electron backscatter diffraction (EBSD) analysis and a lithium migration path.
(2) The present invention provides the single-particle positive electrode active material according to (1) above, wherein the single-particle positive electrode active material is made up of 1 to 50 single crystal particles.
(3) The present invention provides the single-particle positive electrode active material according to (1) or (2) above, wherein the single crystal particles have an average particle diameter (D_{EBSD}) of 0.1 pm to 10 pm.
(4) According to another aspect of the present invention, there is provided a method for preparing a single-particle positive electrode active material, the method including (A) mixing a positive electrode active material precursor and a lithium raw material, and primary firing the mixture at a temperature of 800 °C to 1000 °C to prepare a pre-fired product, and then secondary firing the pre-fired product at a temperature lower than the primary firing temperature to prepare a single-particle lithium composite transition metal oxide, (B) mixing the single-particle lithium composite transition metal oxide and a cobalt raw material to prepare a mixture, and (C) heat-treating the mixture at a temperature of 650 °C to 800 °C.
(5) The present invention provides the method according to (4) above, wherein the primary firing of step (A) is performed in an oxygen atmosphere.
(6) The present invention provides the method according to (4) or (5) above, wherein the secondary firing of step (A) is performed at a temperature of 700 °C to 900 °C.
(7) The present invention provides the method according to any one of (4) to (6) above, wherein the secondary firing of step (A) is performed in an oxygen atmosphere.
(8) The present invention provides the method according to any one of (4) to (7) above, wherein in step (B), the single-particle lithium composite transition metal oxide and the cobalt raw material are mixed in a molar ratio of 1:0.0001 to 0.05.
(9) The present invention provides the method according to any one of (4) to (8) above, wherein in step (B), the mixing is dry mixing.
(10) The present invention provides the method according to any one of (4) to (9) above, wherein the heat-treating of step (C) is performed in an oxygen atmosphere.
(11) According to another aspect of the present invention, there is provided a positive electrode including a current collector, and a positive electrode active material layer positioned on the current collector, wherein the positive electrode active material layer includes the single-particle positive electrode active material according to the present invention.
(12) The present invention provides the positive electrode according to (11) above, wherein the positive electrode has a (cosθ)2 value of 0.6 or greater when θ represents an angle between a lithium migration path of the single-particle positive electrode active material and a parallel axis with respect to an upper surface of the current collector.
(13) The present invention provides the positive electrode according to (11) or (12) above, wherein a difference between the (cosθ)2 value and the (cosα)2 value is 0.2 or less.

### ADVANTAGEOUS EFFECTS

A positive electrode active material according to the present invention has the form of a single particle in which a long axis of a crystal grain and a lithium migration path are aligned in parallel, and thus a battery including the positive electrode active material may have improved initial resistance and lifespan.

### BRIEF DESCRIPTION OF THE DRAWINGS

FIG. 1 is an EBSD Band Contrast (BC) image of a cross-section of a positive electrode including a positive electrode active material of Example 1;

FIG. 2(a) is an SEM image of a cross-section of a positive electrode including a positive electrode active material of Comparative Example 1, and FIG. 2(b) is an EBSD Band Contrast (BC) image of a cross-section of a positive electrode including a positive electrode active material of Comparative Example 1; and

FIG. 3 is a view showing an angle between a c-axis direction vector (Euler angle) of a crystal grain and a vector in a direction perpendicular to an electrode (= an angle between a lithium migration path (Li path) and a vector in a direction parallel to an electrode).

### MODE FOR CARRYING OUT THE INVENTION

It will be understood that words or terms used herein and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

It will be further understood that the terms "include," "comprise," or "have" used herein, specify the presence of stated features, numbers, steps, elements, or combinations thereof, but do not preclude the presence or addition of one or more other features, numbers, steps, elements, or combinations thereof.

As used herein, the term "on" indicates a case in which a certain component is formed directly on an upper surface of another component, and also a case in which a third component is interposed between these components.

As used herein, a "single-particle positive electrode active material" is a concept in contrast to a positive electrode active material having the form of spherical secondary particles in which hundreds of primary particles prepared through typical methods are aggregated, and indicates a positive electrode active material made up of 50 or less single crystal particles. Specifically, the single-particle positive electrode active material may be one single crystal particle, or may take the form in which 2 to 50, 2 to 40, 2 to 30, 2 to 20, 2 to 15, 2 to 10, 2 to 5 single crystal particles are aggregated. In this case, the "single crystal particle" indicates the smallest unit of particles recognized when the positive electrode active material is observed through a scanning electron microscope.

As used herein, an average particle diameter (D₅₀) indicates a particle size at 50% of the volume accumulated particle size distribution of a positive electrode active material precursor, a positive electrode active material, or a lithium transition metal oxide powder. The average particle diameter D₅₀ may be measured using a laser diffraction method. For example, when it comes to measuring the "average particle diameter D50", the positive electrode active material powder is dispersed in a dispersion medium, the dispersion medium is introduced into a commercial laser diffraction particle size measurement instrument (e.g., Microtrac MT 3000) and irradiated with ultrasonic waves having a frequency of about 28 kHz and an output of 60 W to obtain a volume accumulated particle size distribution graph, and the particle diameter at 50% of the volume accumulation may then be calculated.

As used herein, an average particle diameter (D_{EBSD}) of single crystal particles indicates a particle size at 50% of the volume accumulated particle size distribution of the single crystal particles obtained through EBSD analysis using SEM. The EBSD analysis may be to obtain an image using SEM-EBSD equipment (e.g., FEI Quanta200-EDAX Velocity super OIM 8) and analyze the image using image analysis software (EDAX OIM Analysis).

Hereinafter, the present invention will be described in detail.

### Positive electrode active material

The present invention provides a single-particle positive electrode active material having a (cosα)² value of 0.5 or greater when α represents an angle between a long axis of crystal grains obtained through electron backscatter diffraction (EBSD) analysis and a lithium migration path.

The long axis of the crystal grains indicates the longest line segment among line segments where a straight line passing through the center of gravity of the crystal grains is cut by the crystal grains, and the lithium migration path is a path in which lithium ions migrate, and indicates a direction perpendicular to the c-axis direction vector of the crystal grains.

The angle between the long axis of the crystal grains and the lithium migration path may be obtained through EBSD analysis of samples such as a positive electrode active material powder or a cross-section of a positive electrode including a positive electrode active material. For example, the angle may be obtained by measuring and analyzing a cross-section of a positive electrode including a positive electrode active material, using JSM-7900F from JEOL (acceleration voltage: 20 kV). In this case, AztecCrystal from OXFORD Instruments may be used as image processing-EBSD quantification analysis software. Meanwhile, the angle between the long axis of the crystal grains and the lithium migration path is a relative value, and accordingly, it is seen that the value is not affected by equipment used, measurement conditions, and the like.

The inventors of the present invention have found out that, when a positive electrode active material has the form of a single particle and a (cosα)² value of 0.5 or greater, in the process of preparing (rolling, and the like) an electrode, the contraction/expansion direction of the positive electrode active material is arranged to be perpendicular to an upper surface (or an electrode surface) of a current collector, and the lithium migration path is arranged to be parallel to the electrode surface, and thus batteries including the positive electrode active material have improved performance, particularly improved initial resistance and lifespan, and have thus completed the present invention. The (cosα)² value may be 0.5, 0.55, 0.6, or greater, 0.8, 0.9, or 1, or less.

On the other hand, when the (cosα)² value is less than 0.5, the contraction/expansion direction of the positive electrode active material is arranged to be parallel to the electrode surface in the process of preparing (rolling, and the like) an electrode, and accordingly, batteries have degradation in initial resistance and lifespan.

The single-particle positive electrode active material may have an average particle diameter (D₅₀) of 0.1 um to 10 um. Specifically, the single-particle positive electrode active material may have an average particle diameter (D₅₀) of 0.1 um, 1.0 um, 2.0 um, or greater, 5.0 um, 6.0 um, 7.0 um, 8.0 um, 9.0 um, or 10.0 um, or less. In this case, a battery including the single-particle positive electrode active material may have greater rolling ratio, and may thus have improved performance.

According to the present invention, the single-particle positive electrode active material may be made up of 1 to 50 single crystal particles for arranging the contraction/expansion direction of the positive electrode active material and the lithium migration path described above. Specifically, the single-particle positive electrode active material may be made up of 1 or more, 5, 10, 20, 30, 40, or 50 less single crystal particles.

According to the present invention, the single crystal particles may have an average particle diameter (D_{EBSD}) 0.1 pm to 10 um, specifically 0.1 um, 0.2 um or greater, 5 µm, 8 um, or 10 um, or less. In this case, aggregation or gelation of a slurry (a composition for forming a positive electrode active material layer) in the process of preparing an electrode may be prevented, and cracks in particles, which are caused in the process of repeating charging and discharging may be reduced.

According to the present invention, the single-particle positive electrode active material may be a lithium composite transition metal oxide containing nickel (Ni), cobalt (Co), and manganese (Mn). In this case, the lithium composite transition metal oxide may contain nickel (Ni) in an amount of 60 mol%, 65 mol%, or more among all metals except lithium.

According to the present invention, the lithium composite transition metal oxide may have a composition represented by Formula 1 below.

[Formula 1] LiₐNi_{b}Co_{c}Mn_{d}M¹ₑO₂

In Formula 1 above,
M¹ is at least one selected from Al, Zr, B, W, Mo, Cr, Nb, Mg, Hf, Ta, La, Ti, Sr, Ba, Ce, Sn, Y, Zn, F, P, and S, and
0.90≤a≤1.1, 0.60≤b<1.0, 0<c<0.40, 0<d<0.40, 0≤e≤0.10, and b+c+d+e=1 are satisfied.
b indicates an atomic fraction of nickel among metal elements other than lithium in the lithium transition metal oxide, and may be 0.60, 0.65, 0.8, 0.85, or greater, 0.95, or 0.98, or less.
c indicates an atomic fraction of cobalt among metal elements other than lithium in the lithium composite transition metal oxide, and may be 0.01<y1≤0.3 or 0.20≤y1≤0.40.
d indicates an atomic fraction of manganese among metal elements other than lithium in the lithium composite transition metal oxide, and may be 0.01 or greater, 0.10, 0.20, 0.30, or 0.40, or less.
e indicates an element fraction of the M¹ element among metal elements other than lithium in the lithium composite transition metal oxide, and may be 0 or greater, 0.02, 0.05, or 0.10, or less.

### Method for preparing positive electrode active material

The present invention provides a method for preparing a single-particle positive electrode active material, which includes (A) mixing a positive electrode active material precursor and a lithium raw material, and primary firing the mixture at a temperature of 800 °C to 1000 °C to prepare a pre-fired product, and then secondary firing the pre-fired product at a temperature lower than the primary firing temperature to prepare a single-particle lithium composite transition metal oxide, (B) mixing the single-particle lithium composite transition metal oxide and a cobalt raw material to prepare a mixture, and (C) heat-treating the mixture at a temperature of 650 °C to 800 °C.

The method for preparing a positive electrode active material is method for preparing a single-particle positive electrode active material having a (cosα)² value of 0.5 or greater when α represents an angle between a long axis of a crystal grain obtained through electron backscatter diffraction (EBSD) analysis and a lithium migration path. That is, the method for preparing a positive electrode active material is the method for preparing a positive electrode active material according to the present invention described above. The positive electrode active material according to the present invention may be prepared by appropriately regulating a mixing amount of a lithium raw material, firing time, firing atmosphere, and the like, as well as components of the preparation method described above.

Hereinafter, the method for preparing a positive electrode active material will be described in more detail.

### Step (A)

The step (A) is a step of mixing a positive electrode active material precursor and a lithium raw material, and primary firing the mixture at a temperature of 800 °C to 1000 °C to prepare a pre-fired product, and then secondary firing the pre-fired product at a temperature lower than the primary firing temperature to prepare a single-particle lithium composite transition metal oxide. Meanwhile, the pre-fired product may be disintegrated before secondary firing for firing uniformity. When the positive electrode active material precursor and the lithium raw material are mixed and two-step firing is performed instead of one-step firing, deviations between lithium composite transition metal oxides prepared through the disintegration process after the primary firing may be reduced, and in particular, when the primary firing is performed at a temperature of 800 °C to 1000 °C, and the secondary firing is performed at a temperature lower than the primary firing temperature, a uniform particle structure may be obtained through an effect similar to annealing.

As a result, when the lithium composite oxide is prepared according to step (A), it provides benefits in that a single-particle lithium composite transition metal oxide may be prepared, productivity may be improved by reducing the variations upon firing, and the uniform particle structure may be obtained through an effect similar to annealing.

The single-particle lithium composite transition metal oxide may be made up of 1 to 50 single crystal particles for arranging the contraction/expansion direction of the positive electrode active material and the lithium migration path in the electrode upon rolling. Specifically, the single-particle lithium complex transition metal oxide may be made up of 1 or more, 5, 10, 20, 30, 40, or 50 less single crystal particles. The single crystal particles may have an average particle diameter (D_{EBSD}) 0.1 pm to 10 um, specifically 0.1 um, 0.2 um or greater, 5 um, 8 um, or 10 µm, or less. In this case, aggregation or gelation of a slurry (a composition for forming a positive electrode active material layer) in the process of preparing an electrode may be prevented, and cracks in particles, which are caused in the process of repeating charging and discharging may be reduced.

The single-particle lithium composite transition metal oxide may have a cation mixing of 5% or less. The cation mixing value is a value measured for the substitution of lithium and other metal ions in a structure, and when the value is 5% or less, the structure may be stable due to a small amount of impurities in the particle structure, and also structure collapse of particles from the process of repeating charging and discharging and the consequent increase in resistance may be prevented.

The single-particle lithium composite transition metal oxide may include a lithium by-product in an amount of 20,000 ppm or less. In this case, the amount of impurities present in the resulting positive electrode active material is small, and accordingly, the aggregation of a slurry (composition for forming a positive electrode active material) is reduced to improve the process in the preparation of a positive electrode, and as a result, batteries may have improved performance.

The positive electrode active material precursor may be a composite transition metal hydroxide, a composite transition metal oxyhydroxide, or a combination thereof. In addition, the positive electrode active material precursor may be a mixture obtained by dry mixing a nickel raw material, a cobalt raw material, a manganese raw material, and/or a doping raw material.

When the positive electrode active material precursor is a composite transition metal hydroxide or a composite transition metal oxyhydroxide, the positive electrode active material precursor may have, for example, a composition represented by Formula 2 or Formula 3 below.

[Formula 2] Ni_{b'}Co_{c'}Mn_{d'}M²_{e'}(OH)₂

[Formula 3] Ni_{b'}Co_{c'}Mn_{d'}M²_{e'}O·OH

In Formulas 2 to 3 above,
M² is at least one selected from Al, Zr, B, W, Mo, Cr, Nb, Mg, Hf, Ta, La, Ti, Sr, Ba, Ce, Sn, Y, Zn, F, P, and S, and
0.60≤b'<1.0, 0<c'<0.40, 0<d'<0.40, 0≤e'≤0.10, and b'+c'+d'+e'=1 are satisfied.
b' indicates an atomic fraction of nickel among metal elements, and may be 0.60, 0.65, 0.8, 0.85, or greater, 0.95, or 0.98, or less.
c' indicates an atomic fraction of cobalt among metal elements, and may be 0.01 or greater, 0.10, 0.20, 0.30, or 0.40, or less.
d' indicates an atomic fraction of manganese among metal elements other than lithium in the lithium composite transition metal oxide, and may be 0.01 or greater, 0.10, 0.20, 0.30, or 0.40, or less.
e' indicates an element fraction of the M¹ element among metal elements, and may be 0 or greater, 0.02, 0.05, or 0.10, or less.

The nickel raw material, the cobalt raw material, the manganese raw material, and/or the doping raw material may be hydroxide, oxide, carbonate, hydrate, nitrate, chloride, and the like each containing nickel, cobalt, manganese, or doping elements, and one of these may be used alone or two or more of these may be mixed and used, and specifically, Ni(OH)₂, NiO, Co(OH)₂, Co₂O₃, Mn₃O₄, MnO₂, and the like may be used, but the embodiment of the present invention is not limited thereto.

The lithium raw material may be, for example, carbonate, hydrate, hydroxide, nitrate, chloride, and the like each containing lithium, and one of these may be used alone or two or more of these may be mixed and used, and specifically, Li₂CO₃, LiOH·H₂O, LiOH, LiNO₃, LiCl, and the like may be used, but the embodiment of the present invention is not limited thereto.

The lithium raw materials may all be mixed before primary firing, or may be separately mixed before primary firing and before secondary firing.

Meanwhile, in step (A), in addition to the positive electrode active material precursor and the lithium raw materials, a raw material containing a doping element may be additionally mixed, and the raw material containing a doping element may include at least one metal element selected from Al, Zr, B, W, Mo, Cr, Nb, Mg, Hf, Ta, La, Ti, Sr, Ba, Sn, Y, Zn, Ce, F, P, and S.

According to the present invention, the primary firing may be performed at a temperature of 800 °C, 850 °C, or greater, 900 °C, 950 °C, 1000 °C, or less. In this case, particles may be significantly grown to obtain a single-particle positive electrode active material. Meanwhile, when the primary firing temperature is less than 800 °C, a positive electrode active material having the form of multi-particles made up of 50 or more particles is produced, and when the primary firing temperature is greater than 1000 °C, impurities in a positive electrode active material structure are increased.

According to the present invention, the primary firing may be performed in an oxygen atmosphere to promote particle growth.

The primary firing may be performed for 2 hours to 12 hours, specifically, 2 hours, 3 hours, or greater, 9 hours, 10 hours, or 12 hours, or less. When the primary firing time is within the above range, firing uniformity may be obtained and firing time nay be minimized to improve productivity.

According to the present invention, the secondary firing may be performed at a temperature lower than the primary firing temperature, and the secondary firing may be performed at a temperature of 700 °C to 900 °C. Specifically, the secondary firing may be performed at a temperature of 700 °C, 750 °C, or greater, 800 °C, 850 °C, 900 °C, or less. In this case, impurities in the structure may be minimized through an effect similar to annealing.

According to the present invention, in order to maximize the effect similar to annealing, the secondary firing may be performed in an oxygen atmosphere.

The secondary firing may be performed for 2 hours to 12 hours, specifically, 2 hours, 3 hours, or greater, 9 hours, 10 hours, or 12 hours, or less. When the secondary firing time is within the above range, uniformity of the positive electrode active material to be prepared may be obtained and firing time may be minimized to improve productivity.

### Step (B)

The step (B) is a step of mixing the single-particle lithium composite transition metal oxide prepared in step (A) and a cobalt raw material to prepare a mixture.

According to the present invention, in step (B), the single-particle lithium composite transition metal oxide and the cobalt raw material may be mixed in a molar ratio of 1:0.0001 to 0.05. Specifically, the single-particle lithium composite transition metal oxide and the cobalt raw material may be in a molar ratio of 1:0.0001, 1:0.01, or greater, 1:0.03, or 1:0.05, or less. In this case, by-products formed on a surface of the single-particle lithium composite transition metal oxide, which are generated during the preparation process may be reduced as much as possible, and accordingly, the prepared positive electrode active material has improved performance.

The cobalt raw material may be acetate, nitrate, sulfate, halide, sulfide, hydroxide, oxide, or oxyhydroxide, which contains cobalt. For example, cobalt raw material may be Co(OH)₂, Co₂O₃, and the like, preferably Co(OH)₂. Meanwhile, when a highly reactive material such as Co(OH)₃, cobalt acetate, and the like is used as a cobalt raw material, Co may penetrate too much into the inside to prevent a coating portion containing cobalt from being present.

According to the present invention, in step (B), the mixing may be dry mixing. That is, a powder-type cobalt raw material may be simply mixed with the single-particle lithium composite transition metal oxide without a solvent. In this case, process convenience may be increased to improve productivity.

Meanwhile, in step (B), a coating element-containing raw material may be additionally mixed in addition to the single-particle lithium composite transition metal oxide and the cobalt raw material, and metal elements included in the coating element-containing raw material may be Al, Zr, B, W, Mo, Cr, Nb, Mg, Hf, Ta, La, Ti, Sr, Ba, Sn, Y, Zn, Ce, F, P, S, and the like. The coating element-containing raw material may be acetate, nitrate, sulfate, halide, sulfide, hydroxide, oxide, or oxyhydroxide, which contains the metal elements. For example, when the metal element is B, boric acid (H₃BO₃) or the like may be used.

### Step (C)

The step (C) is a step of heat-treating the mixture at a temperature of 650 °C to 800 °C.

The heat-treating in step (C) may be performed at a temperature of 650 °C to 800 °C. Specifically, the heat-treating temperature may be 650 °C or greater, 750 °C, or 800 °C, or less. When the heat-treating temperature is within the above range, cobalt ions may increase only on a surface of the positive electrode active material to reduce by-products (e.g., NiO, and the like) present on the surface. Meanwhile, when the heat-treating temperature is less than 650 °C, cobalt ions fail to penetrate sufficiently into the surface of the positive electrode active material, and when the heat-treating temperature is 800 °C or greater, cobalt ions penetrate into the inside of the positive electrode active material and decrease the effect of reducing by-products present on the surface.

According to the present invention, the heat-treating may be performed in an oxygen atmosphere in order to increase reactivity.

The heat-treating in step (C) may be performed for 2 hours to 12 hours, specifically, 2 hours, 3 hours, or greater, 9 hours, 10 hours, or 12 hours, or less. When the heat-treating time is within the above range, uniformity of the positive electrode active material to be prepared may be obtained and firing time may be minimized to improve productivity.

### Positive electrode

In addition, the present invention provides a positive electrode including a current collector, and a positive electrode active material layer positioned on the current collector, wherein the positive electrode active material layer includes the single-particle positive electrode active material according to the present invention.

According to the present invention, the positive electrode may have a (cosθ)² value of 0.6 or greater when θ represents an angle between a lithium migration path of the single-particle positive electrode active material and a parallel axis with respect to an upper surface of the current collector.

Specifically, the positive electrode includes a positive electrode current collector and a positive electrode active material layer placed on at least one surface of the positive electrode current collector and including the single-particle positive electrode active material according to the present invention. In addition, the positive electrode has a (cosθ)² value of 0.6 or greater when θ represents an angle between a lithium migration path of the single-particle positive electrode active material and a parallel axis with respect to an upper surface of the current collector. The (cosθ)² value may be 0.6 or greater, 0.7, 0.8, 0.9, 1, or less.

A direction in which lithium migrates is a (003) plane, and a normal direction of the (003) plane is a c-axis direction of a crystal structure (hereinafter referred to as the c-axis direction), which is a contraction/expansion direction of positive electrode active material crystals. Therefore, in the conditions described above, the c-axis direction, which is the contraction/expansion direction of the positive electrode active material crystals included in the positive electrode active material layer, is aligned in a direction perpendicular to an upper surface (or an electrode surface) of a current collector. In most batteries, expansion in a direction perpendicular to the upper surface of the current collector is suppressed by an outer case, that is, the electrode is formed of a plane and thus is resistant to deformation in a direction perpendicular to the plane, and accordingly, in the case in which the c-axis direction, which is the contraction/expansion direction of the positive electrode active material crystals included in the positive electrode active material layer, is aligned in a direction perpendicular to the upper surface (or electrode surface) of the current collector, when the positive electrode according to the present invention is applied to a battery, the expansion of the positive electrode active material crystal in the c-axis direction is suppressed by an outer case or the like, thereby improving lifespan performance. On the other hand, when the (cosθ)² value is less than 0.6, the c-axis direction, which is the contraction/expansion direction of the positive electrode active material crystal, is parallel to the upper surface of the current collector, and thus the improvement of lifespan performance is not expected.

According to the present invention, a difference between the (cosθ)² value and the (cosα)² value may be 0.2 or less, specifically 0.2 or less, or 0.1 or less. In this case, it is seen that the positive electrode active material included in the positive electrode according to the present invention has the form and the structure, which are more suitable for forming orientation in the positive electrode. Accordingly, batteries may have improved performance.

The positive electrode current collector is not particularly limited as long as it has conductivity without causing a chemical change in a battery. For example, stainless steel, aluminum, nickel, titanium, baked carbon, or aluminum or stainless steel that is surface-treated with one of carbon, nickel, titanium, silver, and the like may be used. In addition, the positive electrode current collector may typically have a thickness of 3 um to 500 µm, and fine irregularities may be formed on a surface of the current collector to improve the adhesion of a positive electrode active material. For example, the positive electrode current collector may be used in various forms such as a film, a sheet, a foil, a net, a porous body, a foam body, and a non-woven fabric body.

The positive electrode active material layer may include a conductive material and a binder, together with a positive electrode active material.

In this case, the positive electrode active material may be included in an amount of 80 wt% to 99 wt%, more specifically 85 wt% to 98 wt% with respect to the total weight of the positive electrode active material layer. When included in the above amount range, the positive electrode active material may exhibit excellent capacity properties.

In this case, the conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 1 wt% to 30 wt% with respect to the total weight of the positive electrode active material layer.

The binder serves to improve the bonding between positive electrode active material particles and the adhesion between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, styrene-butadiene rubber (SBR), fluorine rubber, or various copolymers thereof, and any one thereof or a mixture of two or more thereof may be used. The binder may be included in an amount of 1 wt% to 30 wt% with respect to the total weight of the positive electrode active material layer.

The positive electrode may be prepared according to a typical method for preparing a positive electrode, except that the positive electrode active material described above is used. Specifically, a composition (slurry) for forming a positive electrode active material layer, which is prepared by dissolving or dispersing the positive electrode active material and selectively, a binder and a conductive material in a solvent, is applied onto the positive electrode current collector, and the positive electrode may then be prepared by drying and roll-pressing the coated positive electrode current collector. In this case, types and amounts of the positive electrode active material, the binder, and the conductive material are as described above. In addition, in another method, the positive electrode may be prepared by casting a composition for forming the positive electrode material layer on a separate support and then laminating a film separated from the support on the positive electrode current collector.

The solvent may be a solvent commonly used in the art, and may be dimethyl sulfoxide (DMSO), isopropyl alcohol, N-methylpyrrolidone (NMP), acetone, water, or the like, and any one thereof or a mixture of two or more thereof may be used. The amount of the solvent to be used is sufficient if the solvent may dissolve or disperse the positive electrode active material, the conductive material, and the binder in consideration of the applying thickness of a slurry and preparation yield, and thereafter, have a viscosity which may exhibit excellent thickness uniformity during application for the preparation of a positive electrode.

### Lithium secondary battery

In addition, the present invention may manufacture an electrochemical device including the positive electrode. The electrochemical device may be specifically a battery, a capacitor, or the like, and more specifically, may be a lithium secondary battery.

Specifically, the lithium secondary battery includes a positive electrode, a negative electrode positioned to face the positive electrode, a separator interposed between the positive electrode and the negative electrode, and an electrolyte. The positive electrode is the same as that described above, and thus, a detailed description thereof will be omitted. Hereinafter, only the rest of the components will be described in detail.

In addition, the lithium secondary battery may selectively further include a battery case for accommodating an electrode assembly composed of the positive electrode, the negative electrode, and the separator, and a sealing member for sealing the battery case.

In the lithium secondary battery, the negative electrode includes a negative electrode current collector and a negative electrode active material layer positioned on the negative electrode current collector.

The negative electrode current collector is not particularly limited as long as it has a high conductivity without causing a chemical change in a battery. For example, copper, stainless steel, aluminum, nickel, titanium, baked carbon, copper or stainless steel that is surface-treated with one of carbon, nickel, titanium, silver, and the like, an aluminum-cadmium alloy, and the like may be used. In addition, the negative electrode current collector may typically have a thickness of 3 um to 500 µm, and as in the case of the positive electrode current collector, fine irregularities may be formed on the surface of the negative electrode current collector to improve the adhesion of a negative electrode active material. For example, the negative electrode current collector may be used in various forms such as a film, a sheet, a foil, a net, a porous body, a foam body, and a non-woven fabric body.

The negative electrode active material layer selectively includes a binder and a conductive material in addition to a negative electrode active material.

A compound capable of reversibly intercalating and deintercalating lithium may be used as the negative electrode active material. Specific examples thereof may include a carbonaceous material such as artificial graphite, natural graphite, graphitized carbon fiber, and amorphous carbon; a metallic compound alloyable with lithium such as Si, Al, Sn, Pb, Zn, Bi, In, Mg, Ga, Cd, an Si alloy, an Sn alloy, or an Al alloy; a metal oxide which may be doped and undoped with lithium such as SiO_{β}(0<β<2), SnO₂, a vanadium oxide, and a lithium vanadium oxide; or a composite including the metallic compound and the carbonaceous material such as an Si-C composite or an Sn-C composite, and any one thereof or a mixture of two or more thereof may be used. In addition, a metallic lithium thin film may be used as the negative electrode active material. Additionally, as a carbon material, low-crystalline carbon, high-crystalline carbon, and the like may all be used. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% with respect to the total weight of a negative electrode active material layer.

The binder is a component for assisting in bonding between a conductive material, an active material, and a current collector, and is typically added in an amount of 0.1 wt% to 10 wt% with respect to the total weight of a negative electrode active material layer. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber, nitrile-butadiene rubber, fluorine rubber, various copolymers thereof, and the like.

The conductive material is a component for further improving the conductivity of a negative electrode active material, and may be added in an amount of 10 wt% or less, preferably 5 wt% or less, with respect to the total weight of a negative electrode active material layer. Such conductive agent is not particularly limited as long as it has conductivity without causing chemical changes in the battery, and may employ, for example, a conductive agent, such as: graphite such as natural graphite and artificial graphite; carbon black such as acetylene black, Ketjen black, channel black, furnace black, lamp black, and thermal black; conductive fibers such as carbon fibers and metal fibers; metal powder such as carbon fluoride powder, aluminum powder, and nickel powder; conductive whiskers such as zinc oxide whiskers and potassium titanate whiskers; conductive metal oxide such as titanium oxide; or polyphenylene derivatives, or the like, may be used.

The negative electrode active material layer may be prepared by applying a composition for forming a negative electrode active material layer, which is prepared by dissolving or dispersing a negative electrode active material and optionally a binder and a conductive material in a solvent, on a negative electrode current collector, followed by drying, or may be prepared by casting a composition for forming a negative electrode active material layer on a separate support and then laminating a film separated from the support on the negative electrode current collector.

Meanwhile, in the lithium secondary battery, a separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable. Specifically, a porous polymer film, for example, a porous polymer film prepared using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of glass fiber having a high melting point, polyethylene terephthalate fiber, or the like may be used. Furthermore, in order to ensure heat resistance or mechanical strength, a coated separator which includes a ceramic component or polymer material and is optionally in a single-layer or multi-layer structure may be used.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the preparation of a lithium secondary battery, but is not limited thereto.

Specifically, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable. In this case, the electrolyte may exhibit excellent performance when the cyclic carbonate and the chain carbonate are mixed in a volume ratio of about 1:1 to about 1:9.

Any compound may be used as the lithium salt without particular limitation as long as it may provide lithium ions used in a lithium secondary battery. Specifically, as the lithium salt, LLiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN (CF₃SO₂)₂. LiCl, LiI, LiB(C₂O₄)₂, or the like may be used. The lithium salt may be used in a concentration range of 0.1 M to 2.0 M. When the concentration of the lithium salt is in the above range, the electrolyte has suitable conductivity and viscosity, thereby exhibiting excellent performance, and lithium ions may effectively move.

In the electrolyte, in order to improve the lifespan properties of a battery, suppress the decrease in battery capacity, and improve the discharge capacity of the battery, one or more kinds of additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like may be further included. In this case, the additive may be included in an amount of 0.1 wt% to 5 wt% with respect to a total weight of the electrolyte.

The lithium secondary battery including the positive electrode active material according to the present invention as describe above stably exhibits excellent discharging capacity, output properties, and lifespan properties, and thus, are useful for portable devices such as a mobile phone, a notebook computer, and a digital camera, and in the field of electric cars such as a hybrid electric vehicle (HEV).

Accordingly, according to another embodiment of the present invention, a battery module including the lithium secondary battery as a unit cell, and a battery pack including the same are provided.

The battery module or the battery pack may be used as a power source of one or more medium-and-large-sized devices, for example, a power tool, an electric car such as an electric vehicle (EV), a hybrid electric vehicle (HEV), and a plug-in hybrid electric vehicle (PHEV), or a power storage system.

The outer shape of the lithium secondary battery of the present invention is not particularly limited, and thus a cylindrical shape using a can, a prismatic shape, a pouch shape, or a coin shape, may be used.

The lithium secondary battery according to the present invention may be used in a battery cell which is used as a power source for a small-sized device, and may also be preferably used as a unit cell for a medium- and large-sized battery module including a plurality of battery cells.

### MODE FOR CARRYING OUT THE INVENTION

Hereinafter, examples of the present invention will be described in detail in such a manner that it may easily be performed by a person with ordinary skill in the art to which the present invention pertains. The present invention may, however, be embodied in many different forms, and is not limited to Examples set forth herein.

### Examples and Comparative Examples

### Example 1

A positive electrode active material precursor having a composition represented by Ni_{0.95}Co_{0.03}Mn_{0.02}(OH)₂ and having an average particle diameter (D₅₀) of 3.5 um and LiOH were mixed in a molar ratio of 1:1.05, and the mixture was subjected to primary firing in an oxygen atmosphere at a temperature of 850 °C for 9 hours to prepare a pre-fired product, and then the pre-fired product was pulverized and was subjected to secondary firing at a temperature of 750 °C for 9 hours to prepare a single-particle lithium composite transition metal oxide having a composition represented by LiNi_{0.95}Co_{0.03}Mn_{0.02}O₂.

The prepared single-particle lithium composite transition metal oxide and powder-type Co(OH)₂ (Huayou Cobalt Co., Ltd.) were mixed at a molar ratio of 1:0.02 to prepare a mixture. The mixture was heat-treated at 700 °C for 5 hours in an oxygen atmosphere to prepare a single-particle positive electrode active material.

### Example 2

A positive electrode active material precursor having a composition represented by Ni_{0.88}Co_{0.03}Mn_{0.09}(OH)₂ and having an average particle diameter (D₅₀) of 3.5 um and LiOH were mixed in a molar ratio of 1:1.05, and the mixture was subjected to primary firing in an oxygen atmosphere at a temperature of 880 °C for 9 hours to prepare a pre-fired product, and then the pre-fired product was pulverized and was subjected to secondary firing at a temperature of 780 °C for 9 hours to prepare a single-particle lithium composite transition metal oxide having a composition represented by LiNi_{0.88}Co_{0.03}Mn_{0.09}O₂.

The prepared single-particle lithium composite transition metal oxide and powder-type Co(OH)₂ (Huayou Cobalt Co., Ltd.) were mixed at a molar ratio of 1:0.02 to prepare a mixture. The mixture was heat-treated at 700 °C for 5 hours in an oxygen atmosphere to prepare a single-particle positive electrode active material.

### Example 3

A mixture of Ni(OH)₂, Co₂O₃, and MnO₂ in a molar ratio of 95:2:3(Ni:Co:Mn) and LiOH were mixed in a molar ratio of 1:1.05, and the mixture was subjected to primary firing in an oxygen atmosphere at a temperature of 890 °C for 9 hours to prepare a pre-fired product, and then the pre-fired product was pulverized and was subjected to secondary firing at a temperature of 780 °C for 9 hours to prepare a single-particle lithium composite transition metal oxide having a composition represented by LiNi_{0.95}Co_{0.03}Mn_{0.02}O₂.

The prepared single-particle lithium composite transition metal oxide and powder-type Co(OH)₂ (Huayou Cobalt Co., Ltd.) were mixed at a molar ratio of 1:0.02 to prepare a mixture. The mixture was heat-treated at 700 °C for 5 hours in an oxygen atmosphere to prepare a single-particle positive electrode active material.

### Example 4

A mixture of Ni(OH)₂, Co₂O₃, and MnO₂ in a molar ratio of 95:2:3(Ni:Co:Mn) and LiOH were mixed in a molar ratio of 1:1.05, and the mixture was subjected to primary firing in an oxygen atmosphere at a temperature of 860 °C for 9 hours to prepare a pre-fired product, and then the pre-fired product was pulverized and was subjected to secondary firing at a temperature of 760 °C for 9 hours to prepare a single-particle lithium composite transition metal oxide having a composition represented by LiNi_{0.95}Co_{0.03}Mn_{0.02}O₂.

The prepared single-particle lithium composite transition metal oxide and powder-type Co(OH)₂ (Huayou Cobalt Co., Ltd.) were mixed at a molar ratio of 1:0.02 to prepare a mixture. The mixture was heat-treated at 700 °C for 5 hours in an oxygen atmosphere to prepare a single-particle positive electrode active material.

### Example 5

A positive electrode active material precursor having a composition represented by Ni_{0.88}Co_{0.03}Mn_{0.09}(OH)₂ and having an average particle diameter (D₅₀) of 3.5 um and LiOH were mixed in a molar ratio of 1:1.05, and the mixture was subjected to primary firing in an oxygen atmosphere at a temperature of 880 °C for 9 hours to prepare a pre-fired product, and then the pre-fired product was pulverized and was subjected to secondary firing at a temperature of 800 °C for 9 hours to prepare a single-particle lithium composite transition metal oxide having a composition represented by LiNi_{0.95}Co_{0.03}Mn_{0.02}O₂.

The prepared single-particle lithium composite transition metal oxide and powder-type Co(OH)₂ (Huayou Cobalt Co., Ltd.) were mixed at a molar ratio of 1:0.02 to prepare a mixture. The mixture was heat-treated at 700 °C for 5 hours in an oxygen atmosphere to prepare a single-particle positive electrode active material.

### Example 6

A positive electrode active material precursor having a composition represented by Ni_{0.88}Co_{0.03}Mn_{0.09}(OH)₂ and having an average particle diameter (D₅₀) of 3.5 um and LiOH were mixed in a molar ratio of 1:1.05, and the mixture was subjected to primary firing in an oxygen atmosphere at a temperature of 850 °C for 9 hours to prepare a pre-fired product, and then the pre-fired product was pulverized and was subjected to secondary firing at a temperature of 780 °C for 9 hours to prepare a single-particle lithium composite transition metal oxide having a composition represented by LiNi_{0.88}Co_{0.03}Mn_{0.09}O₂.

The prepared single-particle lithium composite transition metal oxide and powder-type Co(OH)₂ (Huayou Cobalt Co., Ltd.) were mixed at a molar ratio of 1:0.02 to prepare a mixture. The mixture was heat-treated at 700 °C for 5 hours in an oxygen atmosphere to prepare a single-particle positive electrode active material.

### Comparative Example 1

A positive electrode active material precursor having a composition represented by Ni_{0.95}Co_{0.03}Mn_{0.02}(OH)₂ and having an average particle diameter (D₅₀) of 3.5 um and LiOH were mixed in a molar ratio of 1:1.05, and the mixture was subjected to firing in an oxygen atmosphere at a temperature of 750 °C for 9 hours to prepare a lithium composite transition metal oxide having a composition represented by LiNi_{0.95}Co_{0.03}Mn_{0.02}O₂.

The prepared lithium composite transition metal oxide and powder-type Co(OH)₂ (Huayou Cobalt Co., Ltd.) were mixed at a molar ratio of 1:0.02 to prepare a mixture. The mixture was heat-treated at 700 °C for 5 hours in an oxygen atmosphere to prepare a positive electrode active material having the form of secondary particles.

### Comparative Example 2

A positive electrode active material precursor having a composition represented by Ni_{0.88}Co_{0.03}Mn_{0.09}(OH)₂ and having an average particle diameter (D₅₀) of 3.5 um and LiOH were mixed in a molar ratio of 1:1.05, and the mixture was subjected to firing in an oxygen atmosphere at a temperature of 800 °C for 9 hours to prepare a lithium composite transition metal oxide having a composition represented by LiNi_{0.88}Co_{0.03}Mn_{0.09}O₂.

The prepared lithium composite transition metal oxide and powder-type Co(OH)₂ (Huayou Cobalt Co., Ltd.) were mixed at a molar ratio of 1:0.02 to prepare a mixture. The mixture was heat-treated at 700 °C for 5 hours in an oxygen atmosphere to prepare a positive electrode active material having the form of secondary particles.

### Comparative Example 3

A positive electrode active material precursor having a composition represented by Ni_{0.88}Co_{0.03}Mn_{0.09}(OH)₂ and having an average particle diameter (D₅₀) of 3.5 um and LiOH were mixed in a molar ratio of 1:1.05, and the mixture was subjected to firing in an oxygen atmosphere at a temperature of 840 °C for 9 hours to prepare a lithium composite transition metal oxide having a composition represented by LiNi_{0.88}Co_{0.03}Mn_{0.09}O₂.

The prepared lithium composite transition metal oxide and powder-type Co(OH)₂ (Huayou Cobalt Co., Ltd.) were mixed at a molar ratio of 1:0.02 to prepare a mixture. The mixture was heat-treated at 700 °C for 5 hours in an oxygen atmosphere to prepare a positive electrode active material having the form of secondary particles.

### Experimental Example

### Experimental Example 1: EBSD analysis

### (Preparation of positive electrode)

The positive electrode active materials each prepared in Examples 1 to 6 and Comparative Examples 1 to 3, carbon black (Denka, DenkaBlack) a conductive material, and a PVdF (Kureha, KF1300) binder were added to a solvent of N-methylpyrrolidone (NMP) (Daejeong Chemicals & metals) in a weight ratio of 95:3:2 to prepare a composition for forming a positive electrode active material layer.

The composition for forming a positive electrode active material layer was applied onto one surface of an aluminum foil current collector having a thickness of 20 µm, and dried at a temperature of 135 °C for 3 hours to form a positive electrode active material layer. Thereafter, the positive electrode active material layer was rolled to have a density of 2.7 g/cm³ through a roll pressing method to prepare a positive electrode.

For reference, the electrode density is a value obtained by dividing the mass of a positive electrode active material per unit area of an electrode (excluding the weight of the conductive material, the binder, and the current collector) by the unit volume of an electrode (thickness excluding the current collector × unit area).

### (EBSD analysis)

Using IM5000 from HITACHI (acceleration voltage: 6 kV), the positive electrode was irradiated with argon (Ar) ion beams and cut through an ion milling method to obtain a cross-section of the positive electrode, and JSM-7900F from JEOL was used (acceleration voltage: 20 kV) to measure and analyze the cross-section of the positive electrode. AztecCrystal from OXFORD Instruments was used as image processing-EBSD quantification analysis software.

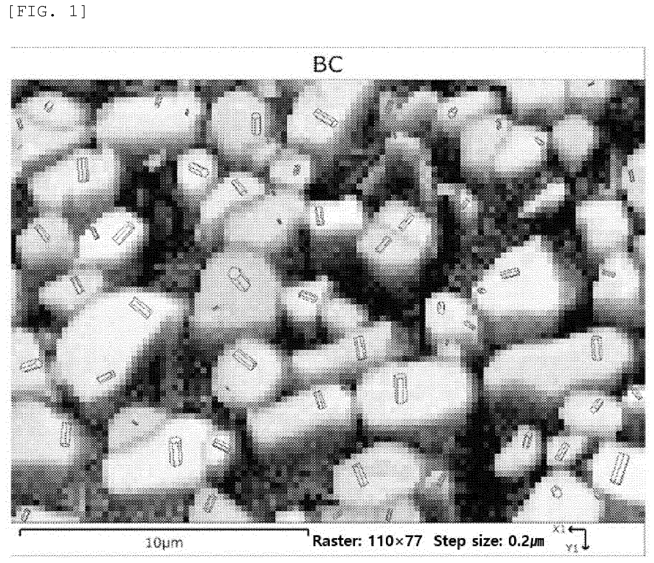

FIG. 1 is an EBSD Band Contrast (BC) image of a cross-section of a positive electrode including the positive electrode active material of Example 1, and shows a crystal grain model according to crystal orientation in the form of a hexagonal column. In the EBSD BC image, the vertical direction (Y1) is a direction perpendicular to the electrode, and the horizontal direction (X1) is a direction parallel to the electrode.

Referring to FIG. 1, it is seen that the single-particle positive electrode active material is made up of single-crystal particles, and it is seen that the long axis direction of the single-particle positive electrode active material particles is aligned in a direction parallel to the electrode.

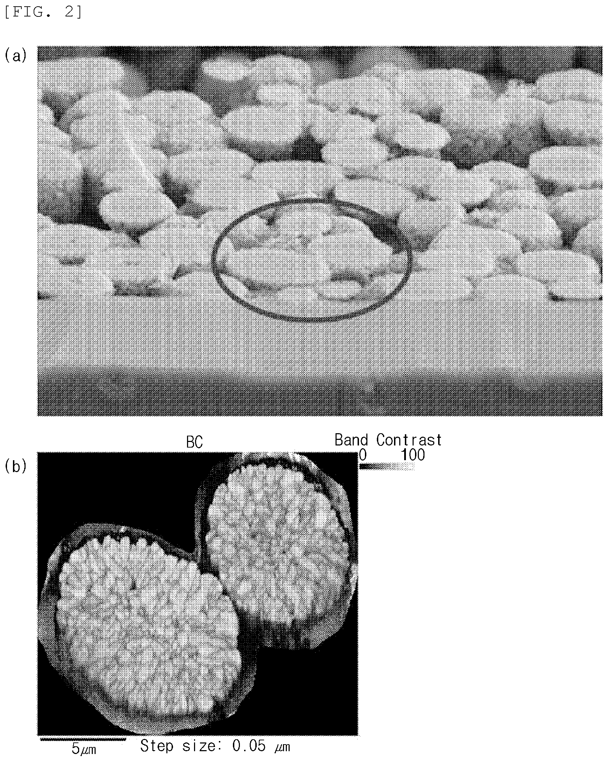

FIG. 2(a) is an SEM image of a cross-section of a positive electrode including the positive electrode active material of Comparative Example 1, and FIG. 2(b) is an EBSD Band Contrast (BC) image of a cross-section of a positive electrode including a positive electrode active material of Comparative Example 1.

Referring to FIG. 2, it is seen that the positive electrode active material of Comparative Example 1 has the form of secondary particles in which hundreds of primary particles are aggregated, and primary particles are present to be randomly arranged within the secondary particles.

An angle formed by the long axis of all crystal grains (about 50 to 100) in the image obtained through the EBSD analysis and the lithium migration path is represented by α, a (cosα)² value of each crystal grain is calculated, and an average value is shown in Table 1 below. It is seen that the long axis of the crystal grains and the lithium migration path are in parallel as the (cosθ)² value is closer to 1.

An angle between the c-axis direction vector (Euler angle) of all crystal grains (approximately 50 to 100) in the image obtained through the EBSD analysis and the vector in a direction perpendicular to the electrode (= an angle between the lithium migration path (Li path) and the vector in a direction parallel to the electrode) is represented by θ, a (cosθ)² value of each crystal grain was calculated, an average value was shown in Table 1 below, and the extent of alignment between the lithium migration path of the positive electrode active material and the electrode was determined.

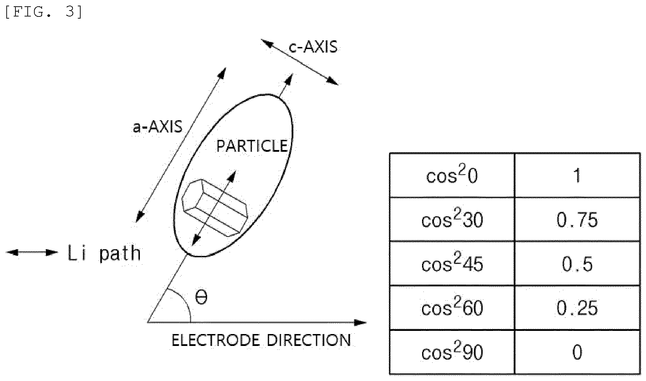

FIG. 3 shows the angle between the c-axis direction vector (Euler angle) of the crystal grains and the vector in a direction perpendicular to the electrode (= an angle between the lithium migration path (Li path) and the vector in a direction parallel to the electrode), and it is seen that the lithium migration path and the direction of an electrode surface are in parallel as the (cosθ)² value is closer to 1.

**[Table 1]**

| | (cosα)2 | (cosθ)² | l(cosα)²-(cosθ)²l |
|---|---|---|---|
| Example 1 | 0.72 | 0.67 | 0.05 |
| Example 2 | 0.76 | 0.68 | 0.08 |
| Example 3 | 0.70 | 0.72 | 0.02 |
| Example 4 | 0.71 | 0.75 | 0.04 |
| Example 5 | 0.67 | 0.63 | 0.04 |
| Example 6 | 0.65 | 0.61 | 0.04 |
| Comparative Example 1 | 0.52 | 0.43 | 0.09 |
| Comparative Example 2 | 0.55 | 0.48 | 0.07 |
| Comparative Example 3 | 0.58 | 0.55 | 0.03 |

### Experimental Example 2: Evaluation of battery properties

### (Preparation of half cell)

The positive electrode active materials each prepared in Examples 1 and 2 and Comparative Examples 1 and 2, carbon black (Denka, DenkaBlack) a conductive material, and a PVdF (Kureha, KF1300) binder were added to a solvent of N-methylpyrrolidone (NMP) (Daejeong Chemicals & metals) in a weight ratio of 95:3:2 to prepare a composition for forming a positive electrode active material layer.

The composition for forming a positive electrode active material layer was applied onto one surface of an aluminum foil current collector having a thickness of 20 µm, and dried at a temperature of 135 °C for 3 hours to form a positive electrode active material layer. Thereafter, the positive electrode active material layer was rolled to have a porosity of 20 volume% through a roll pressing method to prepare a positive electrode.

A lithium metal was used as a negative electrode along with the positive electrode to prepare a half cell.

### (1) Evaluation of initial resistance (DCIR)

The half cells prepared above were each charged at 25 °C with a constant current (CC) of 0.2 C up to 4.25 V, and then charged with a constant voltage (CV) of 4.25 V to reach a charging current of 0.05 mAh (cut-off current), and then discharged with a constant current of 0.2 C for 10 seconds to obtain a voltage difference between fully charge and 10 seconds after the initiation of discharge, and the difference was divided by the current to determine initial resistance, and the results are shown in Table 2 below.

### (2) Evaluation of capacity retention rate and resistance increase rate

The half-cells prepared above were each charged at 25 °C with a constant current (CC) of 0.2 C up to 4.25 V, and then charged with a constant voltage (CV) of 4.25 V to reach a charging current of 0.05 mAh (cut-off current), and then were left for 20 minutes and discharged up to 2.5 V with a constant current of 0.2 C.

Thereafter, the cells were transferred to a chamber at 45 °C, charged with a constant current of 0.33 C up to 4.25 V, and then charged with a constant voltage (CV) of 4.25 V to reach a charging current of 0.05 mAh (cut-off current), and then were discharged with a constant current of 0.33 C up to 2.5 V as one cycle, and 30 cycles of charging and discharging were performed. In this case, the percentage of a discharge capacity of the 30th cycle to a discharge capacity of the first cycle was taken as the capacity retention rate, and the capacity retention rate is shown in Table 2 below. In addition, the percentage of a DCIR value of the 30th cycle to a DCIR value of the first cycle was taken as the resistance increase rate, and the resistance increase rate is shown in Table 2 below. For reference, the DCIR value of the n-th cycle is a value calculated by dividing the voltage difference between full charge and 10 seconds after the initiation of discharge, obtained by discharging with a constant current of 0.33 C up to 2.5 V in the n-th cycle by the current.

**[Table 2]**

| | **Initial resistance (Ω)** | **Capacity retention rate (%)** | **Resistance increase rate (%)** |
|---|---|---|---|
| Example 1 | 18.7 | 96.2 | 135.8 |
| Example 2 | 19.7 | 96.5 | 138.7 |
| Example 3 | 16.9 | 96.9 | 131.2 |
| Example 4 | 16.7 | 97.1 | 128.6 |
| Example 5 | 18.8 | 96.3 | 133.5 |
| Example 6 | 19.2 | 96.4 | 134.1 |
| Comparative Example 1 | 20.9 | 94.9 | 158.0 |
| Comparative Example 2 | 22.5 | 95.1 | 154.6 |
| Comparative Example 3 | 19.8 | 88.7 | 163.2 |

Referring to Tables 1 and 2, the positive electrode active materials of Examples 1 to 6 have the form of a single particle in which a long axis of crystal grains and a lithium migration path are aligned in parallel, and as a result, the lithium migration path and the direction of an electrode surface in a battery including the positive electrode active materials are in parallel, and accordingly, it is seen that the battery may have improved initial resistance and lifespan. In contrast, the positive electrode active materials of Comparative Examples 1 and 2 have the form of secondary particles in which hundreds of primary particles are aggregated, and primary particles randomly arranged in the secondary particles are present therein, and accordingly, it is seen that batteries of Comparative Examples 1 and 2 have significantly poorer initial resistance and lifespan than those of Examples 1 to 6. In addition, the positive electrode active material of Comparative Example 3 is present in a state in which the form of secondary particles in which hundreds of primary particles are aggregated and the form of a single particle are mixed, and accordingly, it is seen that the battery of Comparative Example 3 has significantly poorer initial resistance and lifespan than those of Examples 1 to 6.

## Claims

1. A single-particle positive electrode active material having a (cosα)² value of 0.5 or greater wherein α represents an angle between a long axis of a crystal grain obtained through electron backscatter diffraction (EBSD) analysis and a lithium migration path.

2. The single-particle positive electrode active material of claim 1, wherein the single-particle positive electrode active material is composed of 1 to 50 single crystal particles.

3. The single-particle positive electrode active material of claim 2, wherein the single crystal particles have an average particle diameter (D_{EBSD}) of from 0.1 um to 10 um.

4. A method for preparing a single-particle positive electrode active material, comprising:
(A) mixing a positive electrode active material precursor and a lithium raw material, and primary firing the mixture at a temperature of 800 °C to 1000 °C to prepare a pre-fired product, and then secondary firing the pre-fired product at a temperature lower than the primary firing temperature to prepare a single-particle lithium composite transition metal oxide;
(B) mixing the single-particle lithium composite transition metal oxide and a cobalt raw material to prepare a mixture; and
(C) heat-treating the mixture at a temperature of 650 °C to 800 °C.

5. The method of claim 4, wherein the primary firing of step (A) is performed in an oxygen atmosphere.

6. The method of claim 4, wherein the secondary firing of step (A) is performed at a temperature of from 700 °C to 900 °C.

7. The method of claim 4, wherein the secondary firing of step (A) is performed in an oxygen atmosphere.

8. The method of claim 4, wherein in step (B), the single-particle lithium composite transition metal oxide and the cobalt raw material are mixed in a molar ratio of from 1:0.0001 to 0.05.

9. The method of claim 4, wherein in step (B), the mixing is dry mixing.

10. The method of claim 4, wherein the heat-treating of step (C) is performed in an oxygen atmosphere.

11. A positive electrode comprising:
a current collector; and
a positive electrode active material layer positioned on the current collector,
wherein the positive electrode active material layer comprises the single-particle positive electrode active material according to any one of claims 1 to 3.

12. The positive electrode of claim 11, wherein the positive electrode has a (cosθ)² value of 0.6 or greater wherein θ represents an angle between a lithium migration path of the single-particle positive electrode active material and a parallel axis with respect to an upper surface of the current collector.

13. The positive electrode of claim 12, wherein a difference between the (cosθ)² value and the (cosα)² value is 0.2 or less.
